# EUROPEAN PATENT APPLICATION

(11) **EP 3 305 062 A1**
(43) Date of publication of application: **11.04.2018**
(21) Application number: 16425095.3
(22) Date of filing: 07.10.2016
(51) Int. Cl.: A01G 13/02

(54) **CONNECTION SYSTEM FOR CULTIVATIONS PROTECTION NETS**

(71) Applicant: HR Ritten des Lobis David, 39054 Renon (BZ) (IT); Lobis, Fabian, 39054 Renon (BZ) (IT)
(72) Inventor: Lobis, David, 39054 Renon BZ (IT); Lobis, Fabian, 39054 Renon BZ (IT)
(74) Representative: Romano, Giuseppe

(57) **Abstract**

The present invention relates to the agro-technical field, in particular to the field of the cultivation protection systems equipped with nets; more in particular, the present invention relates to a connection system for a protection net, to a protection net comprising said system and to the related method for manufacturing a protection net equipped with such connection system.

## Description

### Field of application

The present invention relates to the agro-technical field, in particular to the field of the cultivation protection systems equipped with nets.

The present invention, more in particular, relates to a connection system for a protection net comprising said system. The invention further relates to a related method for manufacturing a protection net equipped with such connection system.

### Background

Modern researches in the agro-technical field have addressed huge resources to the protection of cultivations.

To this purpose, in this field it is known to use protection systems as a tool necessary for safeguarding the production.

Typically, the protection systems provide two or more nets equipped with netted surfaces which are suspended on supporting structures arranged along the rows. The supporting structures, for example, include piling equipment, tie-rods, cables and wires which guarantee stability to the protection system, whereas the net elements allow to protect the underneath cultivations, for example by holding hailstones which cannot reach and damage the cultivated area.

Although modern nets allow an effective passage of air and light, generally they are anchored to the supporting structures by means allowing a motion thereof, in order to lay them to cover the cultivation in case of real use need, or in a put-back position in the contrary case.

In each case, such protection systems provide systems for the connection between peripheral edges of adjacent nets, practically by allowing to arrange a tensile structure covering continuously the underneath field.

Known solutions of such connection systems, for example, provide the use of a plurality of the so-called "clips", gripping devices which join the selvedges of two adjacent nets and which, for example, are equipped with hooks, eyelets or other, to hook to a related inter-row cable.

However, such solution has the disadvantage of involving laborious and complicated procedures for installing (or disassembling) the clip and it further guarantees a good sealing of the edges of the two nets only around the application point thereof.

A different type of connection system overcoming such drawbacks provides the use of a "zip"-like closure, equipped with a cursor and selvedges provided with engagement profiles. The cursor, by sliding along the adjacent selvedges of two distinct nets, in a closing direction joins the respective engagement profiles and, moved in an opposite direction, disengages such profiles.

Even if it is effective in terms of tensile strength, structural indeformability, ease and speed of use, such solution results to be expensive to be implemented and it involves the risk of structural failures of the protection system in case of unwished overloads thereto the nets are subjected.

### Brief description of the invention

The object of the present invention is then to overcome the above-illustrated problems, and this is obtained by means of a connection system as defined in claim 1.

In particular, the object of the present invention is to show a connection system for a cultivation protection net which is simple and versatile to be used.

A further object of the present invention is to show an effective connection system, which is cheap to be implemented.

An additional object of the present invention is to provide a net module comprising a connection system, as defined in claim 9, and a related manufacturing method, as defined by claim 16.

Additional features of the present invention are defined in the corresponding depending claims.

The present invention relates to a connection system for a cultivation protection net, which net comprises a first and a second joining element. The joining elements cooperate in order to allow a closing configuration of the connection system, wherein they develop and they are in contact along a connection direction, and an opening configuration of the connection system, wherein they are uncoupled. Each element then provides hooking means allowing a fastening thereof to the protection net.

In particular the first joining element comprises a first engagement profile which preferably is shaped so that, in closing configuration, it could keep, by shape interlocking, a second engagement profile formed onto the second joining element, by defining an engagement area between the two profiles.

According to a preferred embodiment, the first engagement profile can be shaped, for example, so as to show a "C"-shaped cross-section. The second engagement profile will be consequently shaped.

Furthermore, in each case, the configuration of the engagement profiles is so that they open automatically along a detachment direction, which is substantially orthogonal to the connection direction, by keeping the structural integrity of the connection system when the latter is subjected to a higher load value than a predetermined load value along the detachment direction itself.

Such solution allows to obtain an effective connection system thanks to the particular shape of the two engagement profiles. In fact, upon possible overloads thereto the protection net is subjected, the system opens spontaneously so as not to damage the joining elements and the net thereto they are hooked.

Moreover, such solution simplifies the procedures for opening and closing the connection system and it does not need particular maintenance arrangements.

Advantageously, preferred embodiments of the present invention allow to implement a cultivation protection net module, wherein the first and the second joining element of the above-mentioned connection system are fastened along opposite tracts of a peripheral edge thereof, respectively.

Such solution allows to obtain a net module with versatile use, as it results to be possible to hook additional modules therebetween thanks to the particular arrangement of the joining elements.

Other advantages, together with the features and the use modes of the present invention, will result evident from the following detailed description of preferred embodiments thereof, shown by way of example and not for limitative purposes.

### Brief description of the figures

The drawings shown in the enclosed figures will be referred to, wherein:
- figure 1 shows a perspective view of a preferred embodiment of the connection system according to the present invention;
- figure 2 shows a perspective view of the connection system of figure 1 in a configuration corresponding to a closing condition of said system;
- figure 3 illustrates a side section of the system shown in figure 2;
- figure 4 shows a perspective view of the connection system of figure 2 in a step for assembling on a protection net;
- figure 5 shows a perspective view of the connection system of figure 2 assembled on a protection net;
- figure 6 shows a side section of the system shown in figure 5;
- figures 7A, 7B and 7C both show a protection net module according to the present invention with a different assembly configuration of the connection system of figure 1;
- figure 8 shows a plurality of net modules according to the present invention connected therebetween;
- figure 9 shows a cultivation protection system according to the present invention comprising several net modules connected therebetween by several connection systems according to figure 1.

### Detailed description of embodiments of the invention

The present invention will be described hereinafter by making reference to the above-mentioned figures.

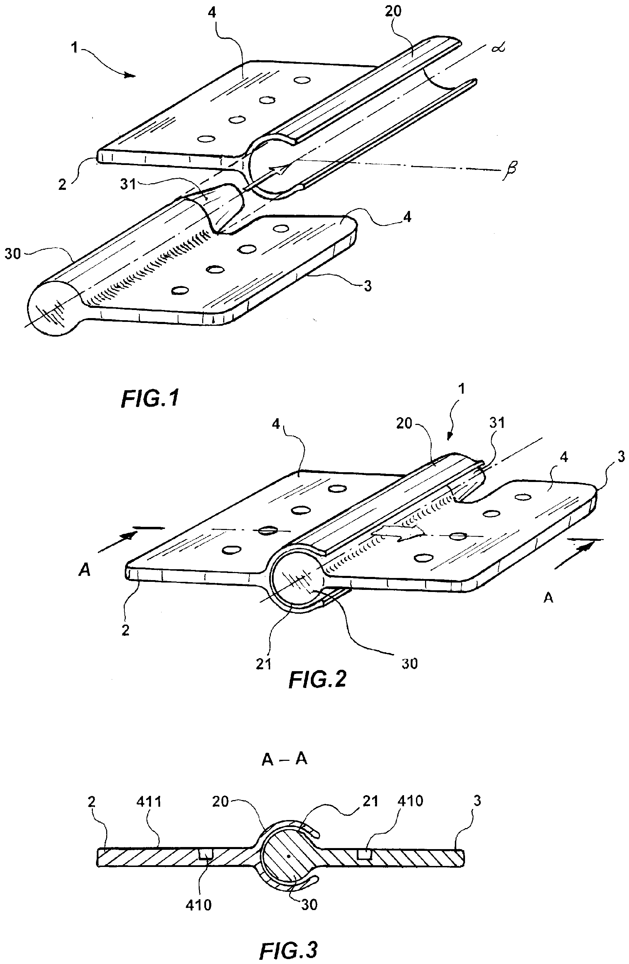

Figure 1 illustrates an overall view of a preferred embodiment of a connection system 1 for a cultivation protection net according to the present invention. As it can be seen, the connection system 1 comprises a first 2 and a second 3 joining element, each one provided with a respective engagement profile 20, 30.

In general terms, the first 2 and the second 3 joining element are configured so as to be able to cooperate and assume a closing or opening configuration of the connection system 1. In the closing configuration the first 2 and the second 3 joining element are in contact, whereas in the opening configuration - as illustrated in figure 1 - they are uncoupled.

More in particular, in the closing configuration, the first 2 and the second 3 joining element are in contact along a connection direction α which results to be even the development direction of each one thereof.

To each joining element 2, 3 respective hooking means is further connected, which is configured to allow a fastening of the connection system 1 to said protection net - not illustrated in figure 1 - thereabout one will discuss more in details hereinafter.

By referring to figures 2 and 3, the first joining element 2 comprises a first "C"-shaped engagement profile 20 so as to define a seat 21 in the concave region formed thereby. Such seat 21 is apt to receive a second engagement profile 30 formed on the second joining element 3.

The second engagement profile 30, in turn, is shaped so that, in the closing configuration of the connection system 1, it could be kept by shape interlocking by the seat 21, by defining an engagement, that is contact, area between the two profiles 20, 30.

In the illustrated embodiment, the first engagement profile 20 develops parallelly to the connection direction α so that the concave area defining the seat 21 is a substantially cylindrical hollow area, the side surface thereof is interrupted at the faced ends of the " C ".

Preferably, the second engagement profile 30 related to the second joining element 3 develops in a way complementary to the seat 21, that is with a substantially cylindrical geometrical shape.

The first 20 and the second 30 engagement profile further result to be relatively sliding along the connection direction α, so as to favour the closing, or manual opening, procedures of the connection system 1.

To this purpose, the second engagement profile 30, preferably, has at least a tapered end 31, so as to ease, during assembly, the engagement between the two joining elements 2, 3 along the connection direction α, and it is hollow along the connection direction α.

The particular shape of the just-described engagement profiles makes that they open automatically along a detachment direction β, substantially orthogonal to the connection direction α, by keeping the structural integrity of the connection system 1 when the latter is subjected to a higher load value than a predetermined load value along the detachment direction itself.

In other words, a detachment between the first 2 and the second 3 joining element corresponds to an overload of the connection system 1, so that each one of these elements keeps its geometrical and functional features. In this way, once the connection system has opened after an overload, an operator can bring the connection system 1 back to the closing configuration without it has been subjected to damages.

In each case the second engagement profile 30 develops so that, upon a tensile stress along the detachment direction β, the shape thereof interferes with the faced ends of the "C"-like shape of the first engagement profile 20.

More in details, when the value of such tensile strength along the detachment direction β is comprised between 200g and 1000g per length centimetre of the engagement area, preferably between 250g and 500g, and still more preferably equal to about 320g per length centimetre of the engagement area, the two joining elements 2, 3 unhook automatically therebetween.

The hooking means 4 allowing to fasten the connection system 1 to the protection net will be now described.

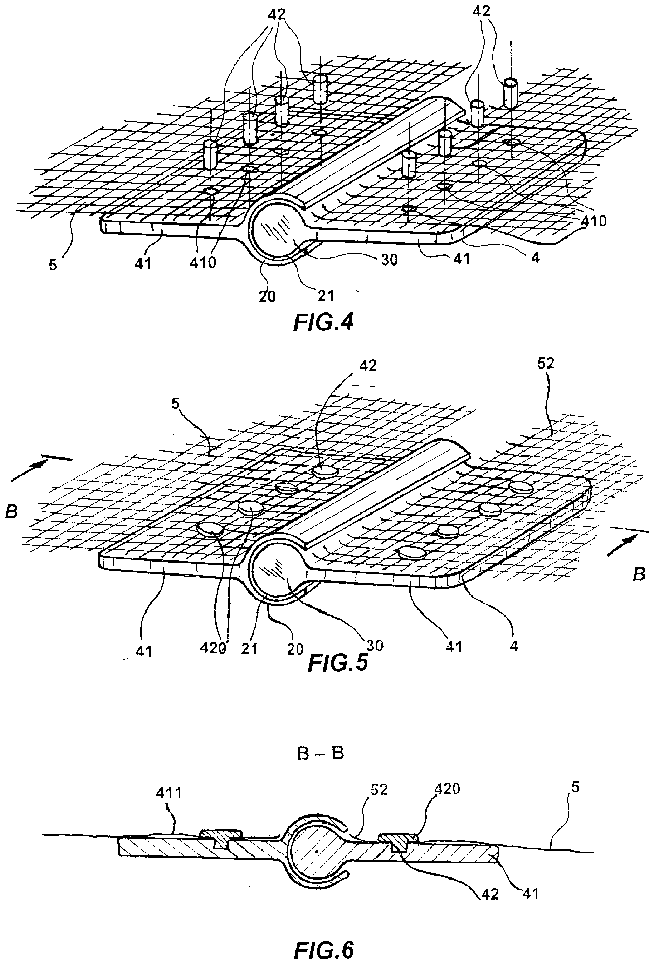

By referring in particular to figures 4, 5 and 6, each joining element 2, 3 provides hooking means 4, resulting to be connected to a respective engagement profile 20, 30.

In general terms, the hooking means 4 comprises a first and a second element for fastening to the net, thereof at least one overhangs from an area of a respective joining element 2, 3 opposite to the area comprising the corresponding engagement profile 20, 30.

In the embodiments illustrated by way of example in the above mentioned figures, the first fastening element is a substantially plate-like element 41, implemented as one single piece with the first engagement profile 20.

The plate-like element 41 is comprised in a plane which, in turn, substantially comprises the detachment direction β and it is equipped with a plurality of housings 410 apt to receive the second fastening element.

The housings 410 are obtained on one single surface of the plate-like element 41 - as it is better visible in figure 3 - in particular on a grasping surface 411 of the latter intended to come into contact with the protection net, designated with the reference 5 in figures 4 to 6.

In this example, the second fastening element is implemented by a plurality of grasping elements 42 which, once inserted inside a respective housing 410 of the plate-like element 41, overhang from the latter with a grasping portion 420.

Under assembled condition, then, each grasping portion 420 interferes with a peripheral edge 52 of the protection net 5, by guaranteeing a firm fastening of each joining element 2, 3 to the net.

More in detail, and as it is visible in figures 5 and 6, in a preferred embodiment, each grasping element 42 has a substantially cylindrical shape and, upon use, it results to be inserted with the grasping portion 420 in a mesh of the peripheral edge 52 of the protection net 5.

In this example, each grasping portion 420 is further configured to be deformed so as to be squeezed and to widen its section, by locking, between itself and the grasping surface 411 of the plate-like element 41, the peripheral edge 52 of the net 5.

Preferred embodiment variants, for example, can provide that the grasping portion 420 of the grasping element 42 is shaped for example like a hook, or with equivalent shapes for hooking to the net.

Additional advantageous variants can instead provide that both first and second fastening element comprise a plate-like element which, upon use, are faced and keep therebetween the peripheral edge 52 of the net 5. In this case, a plate-like element is equipped with projections implemented as one single piece, or which can be fastened, thereon, and each one adapted to insert in a respective housing obtained on the other plate-like element.

In each case, whatever embodiment of the hooking means may be, in a preferred embodiment, they are made of plastic material, as in the illustrated embodiment examples.

The step for fastening the joining elements to the net 5, in this case, is implemented through a thermo-welding process, which provides to heat up and press therebetween the hooking means 4 to a respective peripheral edge 52. In particular, such process allows to squeeze and to widen the section of each grasping portion 420, by locking the peripheral edge 52 of the net 5 between the widened section and the grasping surface 411 of the plate-like element 41.

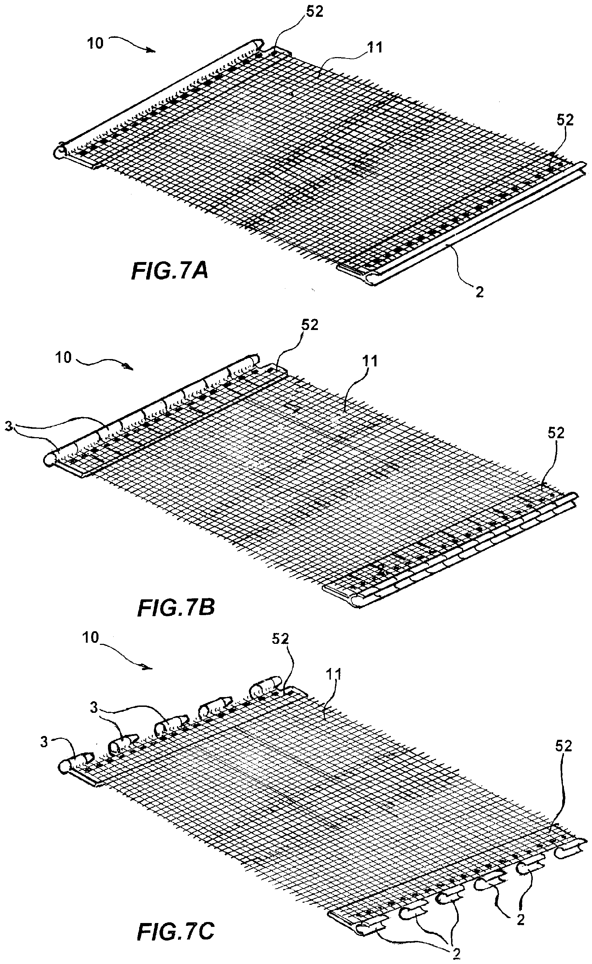

By now referring to figures 7a to 7c a net module 10 for protecting a cultivation is now shown, additionally set forth by the present invention.

As it is visible, the net module 10 comprises a net element 11 with a mesh reticulated surface which is defined by a peripheral edge 52. The peripheral edge, as it is known for the nets intended for such applications, generally is reinforced, that is it can have a closer, or double, weft of meshes or alternatively it can be made of a material having higher mechanical resistance features than the prevailing surface of the net element 11.

The module 10 further comprises one or more connection systems 1 fastened to the peripheral edge thereof 52. In the example illustrated in figure 7a, the net element 11 of the module 10 has a substantially rectangular geometrical shape and it provides only one connection system 1, wherein the first 2 and the second 3 joining element are fastened along the long opposite sides of the peripheral edge 52 of the net element 11, respectively.

However, in different embodiment variants the net element 11 of the module 10 can be shaped according to any quadrilateral shape or even have a general irregular shape, and it further can provide several connection systems 1 distributed along the whole peripheral edge 52.

In any case, whatever shape of the net element 11 may be, the net module 10 according to the invention provides that the first 2 and the second 3 joining element of each one of said one or several connection systems 1 are fastened along opposite tracts of the peripheral edge 52 of the net element 11, respectively.

In a preferred embodiment, the net module 10 provides one single connection system 1, wherein both first 2 and second 3 joining element can develop for the whole length of a respective opposite tract of the peripheral edge 52 of the net element 11 which, in the example illustrated in figure 7a, has a substantially rectangular shape.

Based upon different embodiment variants, advantageously the net module provides a plurality of connection systems 11, wherein the first 2 and the second 3 joining elements can be arranged contiguously in contact therebetween along the respective opposite tract or, alternatively, they can be arranged spaced-apart therebetween. In this way it is possible, for example, to fold on itself the net module 10 by easing the setting-aside activities in case of non use. Such configurations are illustrated in figures 7b and 7c, respectively, wherein, only by way of example, the net element 11 has a substantially rectangular geometrical shape, and wherein each connection system 1 is present only on a pair of opposite parallel sides.

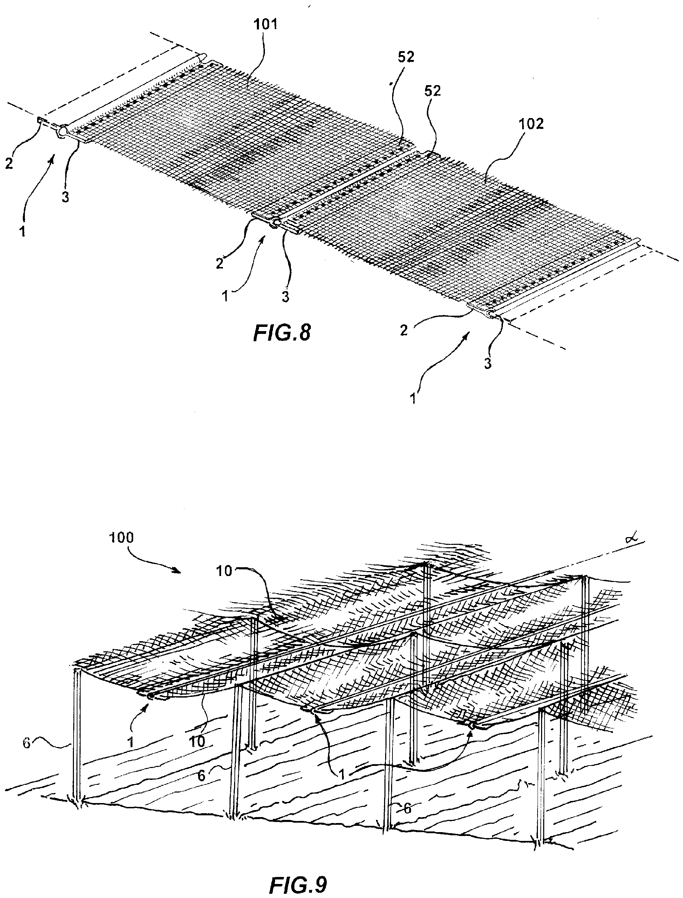

As illustrated in figure 8, the particular configuration for fastening said one or more connection systems 1 to the net element 11 gives the net module "modular" features, that is the possibility of interconnecting several modules therebetween. The connection of several net modules 10 thus allows to implement a cultivation protection system 100, set forth by the present invention too, and now described by referring to figures 8 and 9.

Such system comprises at least two net modules 10 and it provides a supporting structure formed by a plurality of poles 6. The supporting structure is configured for the suspended fastening of the net modules 10 on the cultivation and, in the embodiment illustrated in figure 9, the poles are aligned and spaced-apart from one another so as to create at least two rows of piling equipment.

In order to fasten the net modules 10 to the supporting structure, the latter is equipped with fastening means, the selection thereof is within the comprehension of the person skilled in the art, and thereupon one will not further dwell.

In detail, and as it is visible in figure 8, the protection system 1, in the closing configuration, provides a first net module 101 connected to a second adjacent net module 102 so that the first joining element 2 related to the first module 101 is coupled with the second joining element 3 related to the second adjacent net module 102.

Viceversa, alternatively it is possible that, in the same closing configuration, the second joining element 3 related to the first module 101 is coupled with the first joining element 2 related to the second adjacent net module 102.

Advantageously, figure 9 shows that each net module 10 is fastened to a respective row so that, in the closing configuration, the connection system 1 develops along a longitudinal direction α comprised between the development direction of the two rows of piling equipment.

Although it is not illustrated, it is clear that each pair of net modules 10 - and the respective rows thereto they are fastened - implement a repeatable protection system 100 allowing the connection of additional pairs of modules 10 therebetween and allowing at least each pair of adjacent modules 10 to implement a continuous covering of the underneath cultivation.

The present invention has been sofar described by referring to preferred embodiments thereof. It is to be meant that each one of the technical solutions implemented in the preferred embodiments, herein described by way of example, could be advantageously combined differently therebetween, to create other embodiments belonging to the same inventive core and however all within the protective scope of the herebelow reported claims.

## Claims

1. A connection system (1) for a cultivation protection net (5), comprising:
- a first (2) and a second (3) joining element configured so as to be able to cooperate to allow a closing configuration of the connection system (1) wherein the first (2) and the second (3) joining element develop and are in contact along a connection direction (α) and an opening configuration of the connection system (1) wherein the first (2) and the second (3) joining element are uncoupled,
- hooking means (4) connected to each joining element and configured to allow the fastening of the connection system (1) to said protection net
**characterized in that**
the first joining element (2) comprises a first "C"-shaped engagement profile (20) so as to define a seat (21) apt to receive and, in closing configuration, to keep, by shape interlocking, a second engagement profile (30) formed on the second joining element (3) by defining an engagement area,
wherein the first (20) and the second (30) engagement profile open automatically along a detachment direction (β) substantially orthogonal to said connection direction (α) by keeping the structural integrity of the connection system (1) when the latter is subjected to a higher load value than a predetermined load value along the detachment direction (β).

2. The connection system (1) according to claim 1, wherein said predetermined load value is a tensile load comprised between 200g and 1000g per length centimetre of said engagement area along the detachment direction (β).

3. The connection system (1) according to claim 1 or 2, wherein said predetermined load value is a tensile load and it is comprised between 250g e 500g per length centimetre of said engagement area along the detachment direction (β).

4. The connection system (1) according to anyone of the preceding claims, wherein said predetermined load value is a tensile load equal to about 320g per length centimetre of said engagement area along the detachment direction (β).

5. The connection system (1) according to anyone of the preceding claims, wherein the hooking means (4) comprises a first and a second element for fastening to the net, wherein at least one between the first and the second fastening element overhangs from an area of a respective joining element (2, 3) opposite to the area comprising the corresponding engagement profile (20, 30).

6. The connection system (1) according to claim 5, wherein said first fastening element comprises a plate-like element (41) and wherein said second fastening element comprises a plurality of grasping elements (42), wherein the plate-like element (41) is implemented in one single piece with the engagement profile and it is equipped with a plurality of housings (410) so that each grasping element (42) overhangs with a grasping portion (420) from the respective housing (410) in order to interfere with a peripheral edge (52) of the protection net (5).

7. The connection system (1) according to anyone of the preceding claims, wherein the hooking means (4) is made of plastic material.

8. The connection system (1) according to anyone of the preceding claims, wherein the first (2) and the second (3) engagement profile can relatively slide along said connection direction (α).

9. A net module (10) for protecting a cultivation comprising
o a net element (11) equipped with a peripheral edge (52),
∘ one or more connection systems (1) according to anyone of claims 1 to 6,
wherein the first (2) and the second (3) joining element of each one of said one or more connection systems (1) are fastened along opposite tracts of the peripheral edge (52) of the net element (11), respectively.

10. The net module (10) according to claim 9, wherein the net element (11) has a substantially quadrilateral geometrical shape and wherein the first (2) and the second (3) joining element are fastened along opposite sides of the peripheral edge (52), respectively.

11. The net module (10) according to claim 10, wherein the net element (11) has a first prevailing size with respect to a second size, and wherein said first (2) and second (3) joining element are fastened on opposite parallel sides of the net element (11) which develop along said first size.

12. The net module (10) according to anyone of claims 9 to 11, the net module comprising one single connection system (1), wherein both first (2) and the second (3) joining element develop for the whole length of a respective opposite tract of the peripheral edge (52) of the net element (11).

13. The net module (10) according to anyone of claims 9 to 11, the net module comprising a plurality of connection systems (1), wherein said first (2) and second (3) joining elements are arranged contiguously in contact therebetwen along the respective opposite tract.

14. The net module (10) according to anyone of claims 9 to 11, the net module comprising a plurality of connection systems (1), wherein said first (2) and second (3) joining elements are arranged spaced-apart therebetween along a respective opposite tract.

15. A cultivation protection system (100) comprising at least two net modules (10) according to anyone of claims 7 to 13, the protection system (100) further comprising:
- a supporting structure formed by a plurality of poles (6) and apt to the suspended fastening of said at least two net modules (10) on the cultivation,
wherein, in the closing configuration of the connection system (1), for each pair of adjacent net modules (10) a first joining element (2) of a first net element (101) is coupled with a second joining element (3) of a second net element (102), or viceversa, and so as to allow said at least two net modules to implement a continuous covering of the underneath cultivation.

16. A method for manufacturing a net module (10) for protecting a cultivation comprising the steps of:
- providing at least a connection system (1) according to anyone of claims 1 to 8;
- providing a net element (11) equipped with a peripheral edge (52);
- arranging the hooking means (4) of the first (2) and of the second (3) joining element of the connection system (1) along opposite tracts of the peripheral edge (52) of said net element (11), respectively;
- fastening the hooking means (4) to a respective peripheral edge (52).

17. The method for manufacturing a protection net module (10) according to claim 17, wherein said fastening step is implemented with a thermo-welding process when the hooking means (4) is made of plastic material, wherein said thermo-welding process provides to heat-up and press the hooking means (4) and a respective peripheral edge (52) therebetween.

18. A method for installing a cultivation protection system (100) comprising the steps of:
- providing a protection system (100) according to claim 15;
- positioning said plurality of poles (6) so as to create two or more rows of piling equipment;
- fastening each net module (10) to a respective row so that, in the closing position wherein the first (2) and the second (3) joining element are in contact, the connection system (1) develops along a longitudinal direction comprised between the development direction of said two or more rows of piling equipment.
